# EUROPEAN PATENT SPECIFICATION

(11) **EP 3 370 479 B1**
(45) Date of publication and mention of the grant of the patent: **02.10.2019**
(21) Application number: 17158632.4
(22) Date of filing: 01.03.2017
(51) Int. Cl.: H05B 33/08

(54) **METHOD AND CIRCUIT FOR PROTECTING LEDS FROM TRANSIENT CURRENTS**
VERFAHREN UND SCHALTUNG ZUM SCHUTZ VON LEDS VON TRANSIENTEN STRÖMEN
PROCÉDÉ ET CIRCUIT POUR PROTÉGER DES LEDS DE COURANTS TRANSITOIRES

(43) Date of publication of application: 05.09.2018
(73) Proprietor: Helvar Oy Ab, 02150 Espoo (FI)
(72) Inventor: VANHANEN, Jouni, 02150 ESPOO (FI); KOSKIMIES, Markus, 02150 ESPOO (FI)
(74) Representative: Berggren Oy, Helsinki & Oulu

(56) References cited:
- EP-A1- 2 538 753
- US-A1- 2012 049 754
- US-A1- 2012 181 940
- US-A1- 2014 077 714
- US-A1- 2016 353 532

## Description

### FIELD OF THE INVENTION

The invention relates to protecting solid-state light sources, such as LEDs, from the disadvantageous effects that sharp current spikes may cause. In particular the invention relates to protecting the LEDs against current transients that could occur when closing a switch that is essentially in series with the LEDs.

### BACKGROUND OF THE INVENTION

Different ways exist to vary the effective electric current through solid-state light sources, such as LEDs, in order to make a human observer perceive different intensities of emitted light. The aim of dimming may be simply producing different intensities of light of constant colour. Alternatively the same techniques may be used to produce light of variable colour or colour temperature by selectively dimming the intensity of differently coloured LEDs.

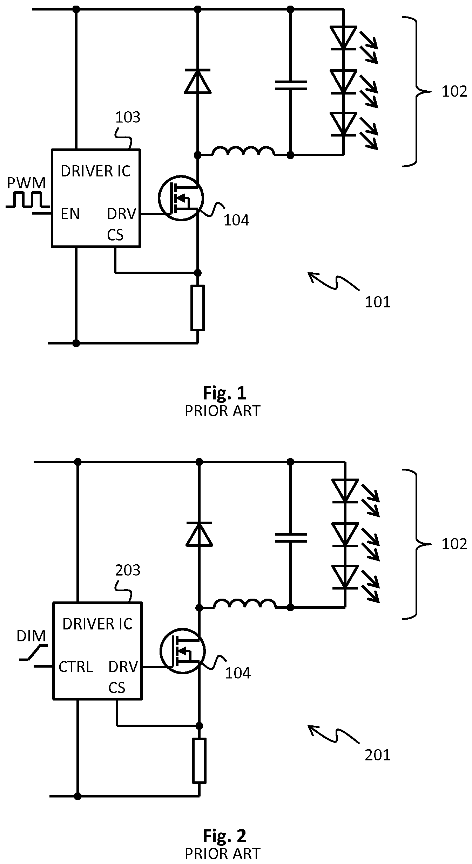

Figs. 1 to 3 illustrate three basic approaches to dimming LEDs. According to fig. 1 a switched-mode power supply such as a buck converter 101 is used to drive electric current through the LEDs 102. A pulse width modulated (PWM) enabling signal is brought from a control circuit (not shown) to an enabling input EN of the driver 103 that produces the gate voltage pulses for the switching transistor 104. The pulsating form of the enabling signal repeatedly enables and disables the operation of the buck converter 101, causing the current through the LEDs 102 to vary between an essentially constant value and zero. If the PWM frequency is high enough, like at least some hundreds of Hz, the human eye does not perceive any flickering but only a mean intensity of light that is proportional to the PWM duty cycle.

The setup of fig. 2 is otherwise similar to that of fig. 1 but the driver 203 is one that accepts an analogue control signal (DIM). The level of the control signal determines the effective current that the buck converter 201 allows to flow through the LEDs 102, for example by changing the reference to which the driver 203 compares the measurement value at its current sense (CS) input. This approach is typically referred to as analog dimming, linear dimming, or constant current reduction (CCR) dimming. Depending on how the internal control loop of the buck converter is implemented the output current will exhibit certain ripple around the effective value (just like during an active EN pulse in the embodiment of fig. 1), but the amplitude of the ripple is so small and its frequency so high that it can be neglected for most practical purposes.

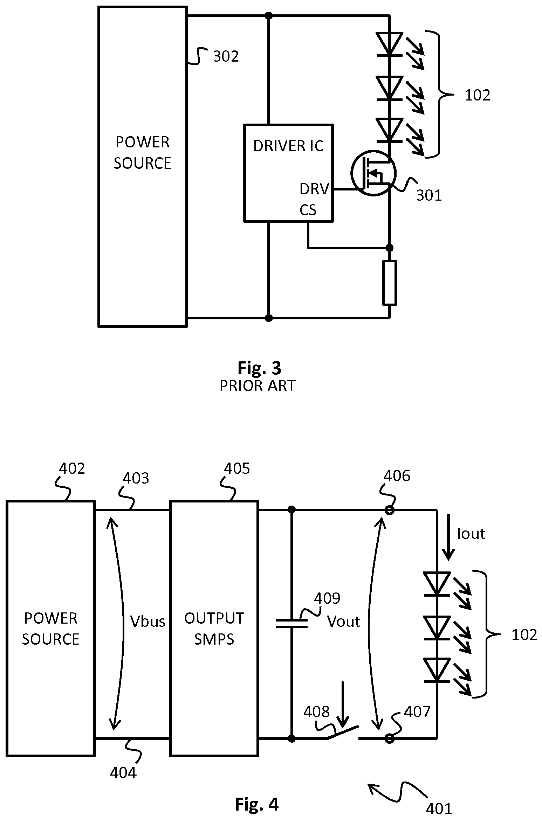

In fig. 3 a switch 301 is connected in series with the LEDs 102. Irrespective of what kind of power source 302 produces the electric current, its flow through the LEDs can be directly enabled or disabled with the switch 301. Repeatedly closing and opening the switch 301 at a sufficiently high frequency produces a pulsed current through the LEDs 102, again making the human eye perceive what actually is fast flickering as only an effective intensity of emitted light.

Each of the basic principles of figs. 1 to 3 has its pros and cons. In fig. 1 the PWM frequency cannot be very much over some kHz, because otherwise at low dimming levels the buck converter 101 cannot operate properly. The analogue dimming scheme of fig. 2 is difficult to realize accurately enough at low current levels, and the direct enabling and disabling of LED current in fig. 3 tends to cause ripple, electromagnetic interference, and current transients that are potentially harmful to the LEDs 102.

In related art, US 2012/049754 A1 discloses a semiconductor light source apparatus that includes a constant current switch controller that detects a voltage applied to a path when each one of the charging path and the discharging path is selected and switches the plurality of switching elements by calculating a switching duty ratio of the plurality of switching elements so that a current flowing through the passive element is maintained at a constant value in accordance with detection results, and a duty controller that adjusts a voltage value supplied by the power supply circuit in accordance with the switching duty ratio calculated by the constant current switch controller.

Further in related art, US 2014/077714 A1 discloses a driving device that includes a switching power supply circuit to convert input power to output power; a first switching element which opens and closes a circuit of a load; an output capacitor connected in parallel to the load and the first switching element; a selection switch disposed between the inductor and the output capacitor, the selection switch switching between a first selection state where the load is electrically connected to the inductor and the second selection state where a reference potential portion is electrically connected to the inductor; a timing controller which operates the switching power supply circuit while the first switching element is closed; and a controller which puts the selection switch into the second selection state before the first switching element is closed.

Further in related art, US 2012/181940 A1 discloses a dimmable LED driver circuit that comprises a resonant DC-DC converter coupled to an output circuit. The converter comprises a half bridge or full bridge switching circuit coupled to a resonant circuit. An output of the resonant circuit is rectified and fed to the output circuit. The output circuit may comprise at least one LED series or shunt switch for switching an LED unit on and off. A control circuit controls the switches of the switching circuit at a variable switching frequency. The control circuit is also configured for controlling the switching circuit for amplitude modulating the converter and for pulse-width modulating the converter at a first pulse-width modulation frequency lower than the switching frequency. The control circuit is may further be configured for controlling the switching of the LED switch at a second pulse-width modulation frequency lower than the switching frequency.

Further in related art, US 2016/353532 A1 discloses a method and system of driving an LED load. A driver is configured to deliver a level of current indicated by a control signal to the LED load when a PWM signal is ON and stop delivering the level of current when the PWM signal is OFF. An output capacitance element is coupled across a differential output of the LED driver. A feedback path, having a store circuit, is configured to store an information indicative of a first voltage level across the output capacitance element as a stored feedback reference signal just after the PWM signal is turned OFF. The feedback path causes the voltage across the output capacitance element to be at the first voltage level just before the PWM signal is turned ON.

Further in related art, EP 2 538 753 A1 discloses driver device for light-emitting diodes comprises a controllable first power source that produces a first voltage at its output. The magnitude of said first voltage depends on a control signal. A buck converter has an input coupled to the output of said first power source, and an output for coupling light-emitting diodes thereto. A load voltage indicator is configured to produce an indication signal depending a load voltage required by a load coupled to the output of said buck converter. A feedback coupling couples said indication signal as a control signal to said controllable first power source

### SUMMARY OF THE INVENTION

It is an objective of the present invention to provide a driver device and a method for driving semiconductor light sources so that the amount of emitted light can be controlled accurately and effectively without subjecting the semiconductor light sources to current spikes. Another objective of the invention is to provide a driver device and a method of said kind with only a small number of components and with simple circuitry. Yet another objective of the invention is to ensure that the driver device and method are easily scaled to output currents of different magnitudes.

The objectives of the invention are achieved by using a series switch on the output current path and by closing the series switch according to a closing sequence that starts with very short pulses that become longer towards the end of the sequence.

According to an aspect of the invention there is provided a driver device for semiconductor light sources. The driver device comprises:
- an output current path, divided into a first part and a second part by an output for said semiconductor light sources, said output comprising a first node and a second node,
- a controllable first switch on said output current path, coupled to one of said first node and said second node,
- an output capacitance coupled to said output and to said first switch so that closing said first switch enables a discharging current to flow from said output capacitance through semiconductor light sources coupled between said first and second nodes,
- a control circuit coupled to a control input of said first switch and configured to selectively open and close said first switch, and
- a switched-mode power supply coupled to said output and configured to convert an internal bus voltage of said driver device into an output voltage for driving an output current through said semiconductor light sources coupled between said first and second nodes.

The control circuit is configured to selectively open and close said first switch in accordance with pulses defined by a closing sequence before enabling said switched-mode power supply to begin said converting of the internal bus voltage to the output voltage, wherein said closing sequence consists of a series of closing pulses that become longer towards the end of the closing sequence, the closing sequence thereby providing the semiconductor light sources coupled between said first and second nodes with protection from a transient current.

According to another aspect of the invention there is provided a method for producing output current for semiconductor light sources coupled between a first node and a second node of an output current path, wherein a controllable switch coupled to one of said first and second nodes is arranged in said output current path and wherein an output capacitance is coupled between said first and second nodes and to said controllable switch enables a discharging current to flow from said output capacitance through said semiconductor light sources. The method comprises, in the following order,:
- keeping the controllable switch open to prevent the output current from flowing, and
- repeatedly opening and closing said controllable switch according to pulses defined by a closing sequence, in which closing pulses become longer towards the end of the closing sequence, thus gradually discharging an output capacitance of the device producing said output current and thereby providing the semiconductor light sources coupled between said first and second nodes with protection from a transient current.

The invention is related to driving semiconductor light sources, such as LEDs, OLEDs, laser diodes, or the like. For simplicity the word LEDs is often used while the meaning is not to limit the discussion to just LEDs in a narrow sense but to semiconductor light sources in general.

The exemplifying embodiments of the invention presented in this patent application are not to be interpreted to pose limitations to the applicability of the appended claims. The verb "to comprise" and its derivatives are used in his patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

- Figure 1: illustrates PWM control of a buck converter,
- figure 2: illustrates analogue dimming,
- figure 3: illustrates direct PWM control of the LED current,
- figure 4: illustrates a principle according to an embodiment of the invention,

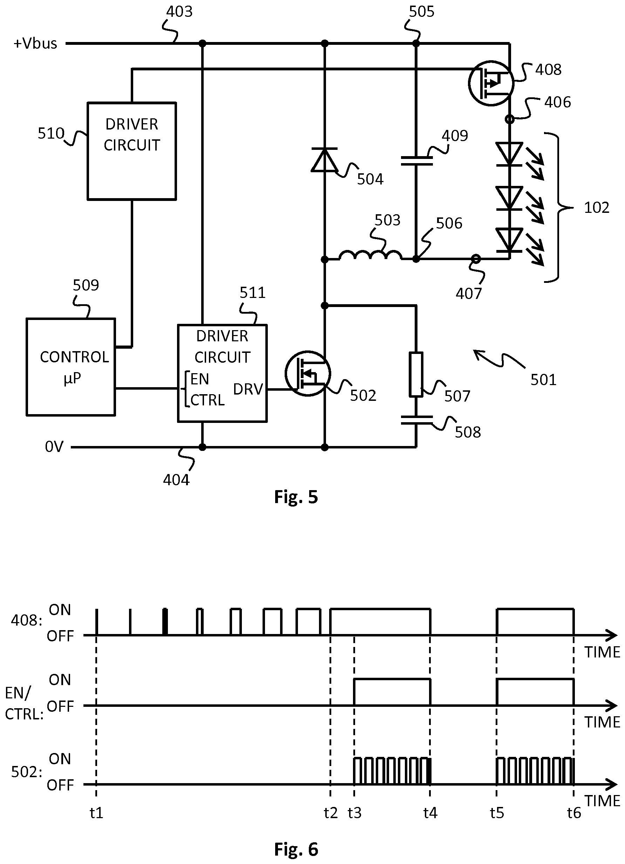

- figure 5: illustrates a simplified circuit diagram of the output stage of a driver device,
- figure 6: illustrates timing of certain signals,

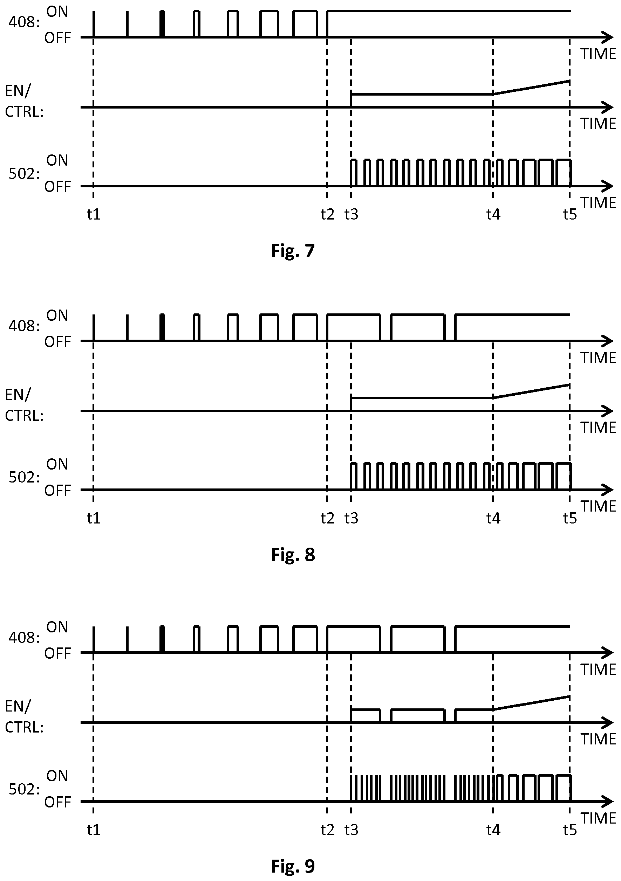

- figure 7: illustrates timing of signals in an alternative embodiment,
- figure 8: illustrates timing of signals in yet another embodiment,
- figure 9: illustrates timing of signals in yet another embodiment, and

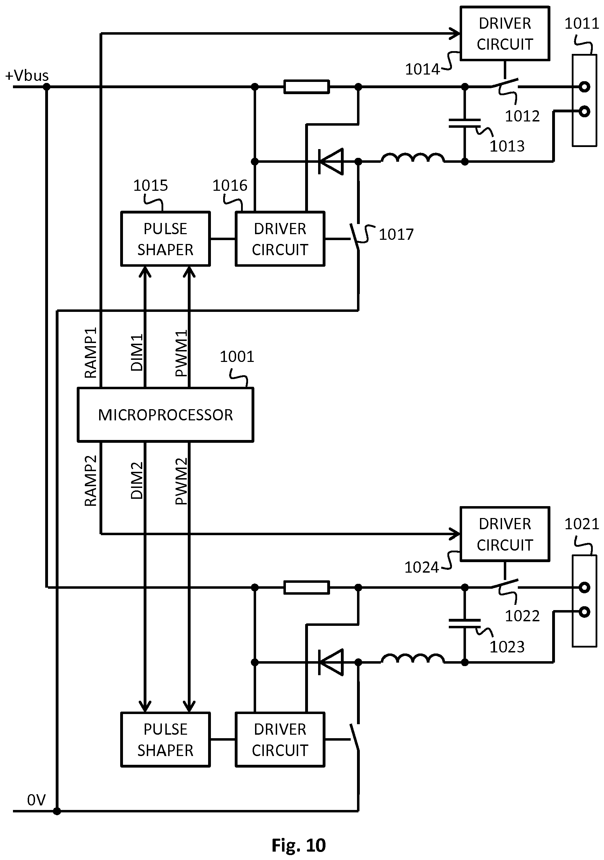

- figure 10: illustrates a simplified circuit diagram of another driver device.

### DETAILED DESCRIPTION

Fig. 4 is a schematic representation of a driver device 401 for semiconductor light sources, which in the drawing are shown as LEDs 102. The driver device comprises a power source 402 that is configured to produce a so-called bus voltage Vbus, which is internal to the driver device 401 and occurs between the upper and lower bus voltage rails 403 and 404. The power source 402 may be for example basically similar to the front end of any known mains-connected LED driver, comprising a mains input, filters and rectifiers, and a PFC (power factor correction) converter. Alternatively the power source 402 may comprise e.g. a Power over Ethernet (PoE) input and the filters and converters that are possibly needed to convert the voltage provided over a PoE cable into a suitable bus voltage. For the purposes of the present invention it is of little significance where the electric energy comes from, and through what kind of intermediate stages it goes, to eventually appear as the bus voltage Vbus.

A switched-mode power supply 405 constitutes the output stage of the driver device 401. Thus the switched-mode power supply 405 is coupled between the power source 402 and the output for the semiconductor light sources, and is configured to convert the internal bus voltage Vbus into an output voltage Vout for driving an output current lout through the semiconductor light sources.

The output current path of the driver device is at least conceptually divided into a first (upper) part and a second (lower) part by the output, which comprises a first node 406 and a second node 407. In many cases the LEDs 102 come on a LED module that is mechanically separate from the driver device proper, so the first node 406 and second node 407 may appear quite tangibly as two poles of an output connector of the driver device. Also integrated solutions exist in which the driver device and LEDs are built on a common substrate, such as a common circuit board. In such cases the division into a first part and a second part of the output current path, and the appearance of the first and second nodes, are more conceptual than tangible. The reason of using these concepts is to emphasize that the components and characteristics of the driver device on the output current path both before and after the LEDs have significance to the way in which current flows through the LEDs.

A controllable first switch 408 appears on the output current path. In fig. 4 the first switch 408 is in the second (lower) part of the output current path and is thus coupled to the second node 407, but it might also be in the first (upper) part of the output current path and be coupled to the first node 406. The first switch 408 may be for example a suitably chosen switching transistor or other switching component, the conductive property of which can be controlled with an externally provided electric signal.

An output capacitance 409 is coupled to the output of the driver device 401 and to the first switch 408. In the embodiment of fig. 4 there is a direct coupling between the first electrode of the output capacitance and the first node 406. From the second electrode of the output capacitance the coupling goes through the first switch 408 to the second node 407. In a LED driver the magnitude of the output capacitance 409 may be in the order of hundreds of nanofarads, or some microfarads, and its typical physical appearance is one or more capacitors as discrete components on the circuit board.

Even if the switched-mode power supply 405 has been inactive for a certain time and its power switch is not conductive, the output capacitance 409 may be full of charge, if the nature of the coupling is such that the bus voltage Vbus gets to charge the output capacitance 409. This is the case when there is sufficient electric coupling between the output capacitance 409 and the bus voltage rails 403 and 404 even when the power switch of the switched-mode power supply 405 is not conductive. Further the nature of the coupling at the output of the driver device may be such that closing the first switch 408 enables a discharging current to flow from the output capacitance 409 through the semiconductor light sources that are coupled between the first and second nodes 406 and 407. This discharging current may momentarily reach a considerable magnitude, constituting a current spike that may be harmful to the LEDs 102. Alternatively or additionally the current spike may cause the LEDs to emit a bright blink of light, which may disturb users.

Fig. 5 is a simplified circuit diagram of an output stage 501 of an exemplary driver device for semiconductor light sources such as LEDs 102. An internal bus voltage of the driver device appears between an upper rail 403 and a lower rail 404. The output stage has essentially the topology of a buck converter of the low side switch type, so that a power switch 502 is between a freewheeling current loop (comprising the LEDs 102, an inductor 503, and a freewheeling diode 504) and the lower rail 404 of the bus voltage. The first part of the output current path comes from the upper (positive) rail 403 of the internal bus voltage and comprises, in this order, a coupling to the first electrode of the output capacitance 409 at point 505, the first switch 408 (here: a MOSFET of the p-channel type), and the first node 406 of the output. The second part of the output current path comprises, in this order, the second node 407 of the output and a coupling to the second electrode of the output capacitance 409 at point 506.

The first electrode of the output capacitance 409 is directly connected to the upper rail 403 of the bus voltage in fig. 5. Between the second electrode of the output capacitance 409 and the lower rail 404 of the bus voltage are the inductor 503 as well as the power switch 502 and parallel to it a series connection of a resistor 507 and capacitor 508. These constitute sufficient electric coupling so that the bus voltage Vbus gets to charge the output capacitance 409 even when the power switch 502 is not conductive.

The control input of the first switch 408 is its gate electrode, to which a control circuit 509 is coupled through a first driver circuit 510. The role of the first driver circuit 510 is to deliver the driving pulses to the control input of the first switch 408 at a suitable polarity, amplitude, and slew rate; the origin of the driving pulses is preferably in the control circuit 509, so in the following we may pay most attention to the role and actions of the control circuit 509. The control circuit 509 is configured to selectively open and close the first switch 408 by producing (or unambiguously causing the production of) the appropriate driving pulses and providing them (with the help of the first driver circuit 510) to the control input of the first switch 408. In particular, the control circuit 509 is configured to implement a closing sequence in closing the first switch 408. The closing sequence consists of a series of closing pulses that become longer towards the end of the closing sequence.

Fig. 6 illustrates an example of the on/off switching of the first switch 408, the value of the control signal to the second driver circuit 511, and the switching pulses to the power switch 502. Before time t1 both the first switch 408 and the power switch 502 in the buck converter are open, and even if the output capacitance 409 is fully charged no current flows through the LEDs 102 and no light is consequently emitted. The closing sequence takes place between times t1 and t2. As a field effect transistor the first switch 408 has a characteristic turn-on time, which according to the established terminology of semiconductor technology is the time between the moment when a closing pulse to its gate begins and the moment when the conductivity of the channel between its drain and source has reached 90% of its maximum value. During the turn-on time the channel of the first switch 408 conducts some current but presents a considerable resistance. Thus when at least the first pulse in the closing sequence is shorter than said characteristic turn-on time, the first pulse (or a number of first pulses) in the closing sequence are not long enough to make the first switch 408 fully conductive. As a result, an electric current of a smaller amplitude makes it through the first switch 408 during the first pulse (or a number of first pulses) in the closing sequence than if the switch 408 had been closed at once, or if each pulse in the closing sequence would have been long enough to make the switch 408 fully conductive.

In addition to selectively opening and closing the first switch 408 the control circuit 509 is also responsible for selectively enabling and disabling the operation of the buck converter in fig. 5. This is accomplished by utilizing an enabling input or control input in the second driver circuit 511, which second driver circuit repeatedly switches the power switch 502 on and off when the converting of the internal bus voltage to the output voltage is enabled by the control circuit 509. In the following we may first consider the possibility of using an enabling input in the second driver circuit 511, with close correspondence to what was explained of known PWM control earlier with reference to fig. 1. In order to enable the conversion of the internal bus voltage to the output voltage in the buck converter (or more generally: in the switched-mode power supply at the output stage of the driver device), the control circuit 509 is configured to provide an active level signal to the enabling input of the second driver circuit 511. In fig. 6 this happens at time t3, and the active level signal lasts until time t4. Since the operation of the buck converter is enabled for this duration, the power switch 502 receives repeated switching pulses from the second driver circuit 511, as seen on the lowest time axis in fig. 6. The frequency and duty cycle of those switching pulses depend e.g. on the current control scheme that the buck converter employs, and is of minor importance here - output current monitoring has been left out from the simplified circuit diagram of fig. 5 in order to preserve graphical clarity.

The control circuit 509 is configured to close the first switch 408 in accordance with said closing sequence before enabling the buck converter (or more generally: the switched-mode power supply) to begin the converting of the internal bus voltage to the output voltage. During the interval between times t2 and t3 in fig. 6 the first switch 408 remains conductive but the enabling signal to the second driver circuit 511 (and thus also the switching pulses to the power switch 502) has not yet begun. This interval can be considered as a safety margin ensuring that the closing sequence used to close the first switch 408 has ended, the charging state of the output capacitance 409 has stabilized, and the first switch 408 is certainly conductive at the moment when the buck converter is activated. This kind of an additional interval is not necessarily needed; in an alternative embodiment the enabling signal to the second driver circuit 511 can begin immediately at the same moment when the closing sequence ends, so t2 may be the same as t3.

Fig. 6 also shows an example of how the control circuit 509 is configured to perform pulse width modulation of the output current of the driver device by repeatedly enabling and disabling the conversion of the internal bus voltage to the output voltage (the middle time axis in fig. 6) and by repeatedly closing and opening the first switch 408 in concert with said repeated enabling and disabling. At time t4 the enabling signal goes inactive, ending the provision of switching pulses to the power switch, and also the first switch 408 goes off. At time t5 the enabling signal goes active, beginning anew the provision of switching pulses to the power switch, and also the first switch 408 goes on again, only to be opened once more at time t6 when also the operation of the buck converter is halted again. The duration of the period t4-t5 is so short that the output capacitance 409 does not become fully charged, or it does not become charged to an extent that would again cause a large current spike at moment t5. For example if the PWM frequency (the frequency of the pulses on the middle time axis in fig. 6) is 1.2 kHz, said period has a maximum duration way less than one millisecond.

Opening the first switch 408 at the same time when also the buck converter is disabled, like at times t4 and t6 in fig. 6, makes output current control more accurate particularly at very low dimming levels. If only the operation of the buck converter was disabled at the end of a PWM pulse in the enabling signal from control circuit 509, without opening the first switch 408, the output current would decrease at a constant rate that only depended on the component values in the freewheeling current loop and the load, until the voltage across the output capacitance reached the sum of forward threshold voltages of the LEDs. At low dimming levels the length of the current decreasing period may be significant in comparison to the length of the PWM pulse, so the length of the actual PWM pulse would not correspond to the effective output current (and thus the effective light level perceived by the user) as accurately as desired. Opening the first switch 408 cuts the "tail" of the output current pulse and thus enhances accuracy.

The nature and timing of an exemplary closing sequence may be considered with reference to fig. 6. In general, any PWM frequency used to dim LED lighting should be high enough in order to avoid perceivable flicker. At the time of writing this description the common understanding is that the limit of acceptable PWM frequency depends on modulation depth, so that for example the so-called Lehman-Wilkins graph recommends setting the lower limit at 1.2 kHz for 100% flicker and accepting 100 Hz at about 2.5% flicker, with log-log interpolation between these two points. As the purpose of the interval between times t1 and t3 in fig. 6 is actually not yet to produce light but to only get the first switch 408 closed without causing a current spike through the LEDs, flicker considerations do not yet apply to the same extent as from time t3 onwards. However, based on said recommendation it may be said that the rate at which the closing pulses occur during the closing sequence (between times t1 and t2 in fig. 6) should be higher than 1 kHz. In practice, in order to have sufficient freedom to begin with short enough pulses and end with long enough pulses, and to ensure that sufficient the output capacitance discharges sufficiently during the closing sequence, it may be advisable to provide the pulses of the closing sequence at a significantly higher rate, like tens or hundreds of kHz.

The resolution at which the pulses of the closing sequence become longer towards the end of the closing sequence may be quite fine, depending on the capability of the control circuit 509. As an example, if the internal clock frequency of the control circuit 509 is in the order of 50 MHz, each increasing step in pulse length may be in the order of 20 nanoseconds. This feature makes the use of a closing sequence as explained above easy to adapt to driver devices of various kinds, because it is not necessary to know exactly and/or beforehand, what will be the length of the characteristic turn-on time of the component that will be used as the first switch 408. The closing sequence may begin with pulses that are certainly shorter than any characteristic turn-on time of any typical switching component used in output stages of driver devices, so that when the pulses become longer towards the end of the closing sequence, their length will inevitably take the switching component through its resistive mode at some point.

The lower limit of pulse length in the closing sequence is of the order of one clock cycle in the control circuit 509: for example a clock frequency in the order of 50 MHz sets the lower limit as 20 nanoseconds. As an upper limit of the pulse length it can be thought that they cannot at least be longer than the PWM pulses. If the PWM frequency is not lower than 1.2 kHz, corresponding to the cycle time of approximately 830 microseconds, and dimming down to 1% should be achieved, one PWM pulse may have e.g. the length 8,3 microseconds, which is thus an upper limit for the length of an individual pulse in the closing sequence as well.

The particular way in which the pulses in the closing sequence become longer is not important to the present invention. Some possible approaches are
- continuous, gradual lengthening: each pulse is slightly longer than the previous one,
- stepwise lengthening: first a number of pulses of a first length, then a number of pulses of a second, slightly longer length, and so on,
- any combination of those above: for example first a number of pulses of a first length, then continuous, gradual lengthening, or partial sequences during which the pulse length stays constant, separated by partial sequences of continuous lengthening.

Lower and upper limits for the duration of the whole closing sequence (i.e. the interval between times t1 and t2 in fig. 6) may come from practical considerations. If the closing sequence has only some tens of pulses, beginning from only some tens of nanoseconds and reaching a longest pulse length of some hundreds of nanoseconds, and the frequency of pulses in the closing sequence is hundreds of kHz, the closing sequence does not necessarily take longer than some tens of microseconds. Depending on the turn-on times of switching transistors used for this kind of purposes the shortest pulse length may be considerably longer, like some hundreds of nanoseconds, in which case also the longest pulse length eventually arrived at may be in the order of microseconds. The closing sequence may comprise hundreds, thousands, or even hundreds of thousands of pulses.

An upper limit for the duration of the closing sequence may come from the fact that the need to activate the output stage of a driver device may be a consequence of a user changing the setting of a dimmer. Users are typically quite anxious to see their actions affecting the lighting, so the delay before the lights actually begin to change should not be more than some seconds. Thus the duration of the closing sequence should be less than, say, one second. Closing sequences of even longer duration are possible if one does not need to consider the effects of the resulting delay in making changes to the characteristics of light.

One example of a closing sequence that has been found to work well has the following form:
- pulse length in the beginning: 104 nanoseconds,
- pulses of each length are repeated 20 times before increasing pulse length,
- each subsequent pulse length is 20.83 nanoseconds longer than the previous one,
- pulse length in the end: 416 nanoseconds,
- pulse frequency: higher than 100 kHz, preferably 240 kHz,
- total duration of the closing sequence: less than 2 milliseconds, preferably 1.3 milliseconds.

Fig. 7 illustrates timing of certain signals in a case in which an analogue control signal to the second driver circuit 511 is used in the same way as in the known CCR dimming of fig. 2. The closing sequence between moments t1 and t2, and the safety margin of keeping the first switch 408 closed between moments t2 and t3, are the same as in fig. 6. At moment t3 the second driver circuit 511 is enabled by raising the analogue control signal from zero to some relatively small value, corresponding to a relatively low dimming level. The internal control loop of the second driver circuit 511 applies a correspondingly small reference value to determine the maximum allowable measured current, which results in a relatively small duty cycle of the switching pulses to the power switch 502. Between moments t4 and t5 the level of the analogue control signal gets higher, meaning that brighter light is required, and correspondingly the duty cycle of the power switch 502 becomes larger.

Fig. 8 illustrates an alternative to the embodiment of fig. 7. The difference is that during the interval between moments t3 and t4, when only a very dim level of lighting is required, the first switch 408 performs PWM dimming by repeatedly cutting the main current path as instructed by the control signal it receives from the control circuit 509 (through the driver circuit 510). This embodiment involves the advantage that the smallest constant current level to which the lowest level of the analogue control signal to the second driver circuit 511 corresponds can still be kept sufficiently high to prevent e.g. colour distortions that could otherwise occur in the LEDs due to the small magnitude of current, and still the required very low dimming level can be achieved through the PWM dimming performed by the first switch 408.

Some driver circuits of switched-mode power supplies have the special feature of accepting both analogue control signals and digital enabling pulses as inputs through a common input pin. This feature is found in many commercially available driver circuits, an example of which is the MP24894 manufactured by Monolithic Power Systems, San Jose, California. According to the circuit manufacturer the MP24894 can be made to apply a variable maximum current limit by coupling between its control input pin and ground pin a voltage that is at least 0.3V but less than 2.7V. The circuit manufacturer has meant that digital low/high pulses (0V / 3V) applied to the same input would act as disabling/enabling pulses that implement PWM control. However, as explained in the European patent application number EP15150646.6, a driver circuit of this kind can be controlled with pulses that have an amplitude between 0.3V and 2.7V to implement both CCR dimming and PWM dimming, so that the on-time of a pulse is the enabling period during which the output channel produces an output current according to the PWM principle, while the amplitude of the pulse determines the maximum value of output current that it may produce during that pulse.

Fig. 9 illustrates timing of certain signals when the second driver circuit 502 is of the kind described above. The closing sequence between moments t1 and t2 is again the same as in figs. 6 to 8, as is the safety margin between moments t2 and t3, if one is considered advantageous. Between moments t3 and t4 enabling pulses of a relatively small amplitude are given to the second driver circuit 502. The amplitude of the enabling pulses is small in order to make the second driver circuit apply a relatively small reference value to determine the maximum allowable measured current during the intervals when it is enabled. Thus the duty cycle of the power switch 502 is very small during the enabling pulses in the control signal, and the power switch remains completely non-conductive between the enabling pulses. The main current path is repeatedly cut with the first switch 408 in concert with disabling the second driver circuit 511. Between moments t4 and t5 pure CCR dimming is applied, by gradually changing the level of the control signal to the second driver circuit 511 while keeping the second driver circuit 511 enabled all the time. The results are seen as the increasingly larger duty cycle of the switching action of the power switch 502. The first switch 408 can be kept continuously closed after moment t4.

One advantageous application of the use of a closing sequence of the kind described above is in a driver device with two or more parallel output channels that share a common control circuit. Such a driver device can be used to drive for example tunable white lighting, so that a first output channel is coupled to produce output current to warm white LEDs, a second output channel is coupled to produce output current to cold white LEDs, and the common control circuit controls the relative intensities of the warm and cold white LEDs to produce white light of desired colour temperature.

Fig. 10 illustrates a simplified circuit diagram of a two-channel driver device for semiconductor light sources. The first channel is in the upper part of the drawing, above the microprocessor 1001 that constitutes the control circuit for both channels. The output current path of the first channel is divided into a first part and a second part by a two-pole output connector 1011, showing a tangible example of an output for semiconductor light sources. A controllable first switch 1012 is located in the first part of said output current path in the same way as the p-channel MOSFET in fig. 5. An output capacitance 1013 is coupled across the output, with the first switch 1012 located between one electrode of the output capacitance 1013 and the corresponding node of the output. Also the location of the output capacitance is similar to that of the output capacitance 409 in fig. 5, so that closing the first switch 1012 enables a discharging current to flow from the output capacitance 1013 if semiconductor light sources are in place and bridge the output connector 1011, completing the current path for the discharging current. The controlling microprocessor 1001 is coupled to a control input of the first switch 1012 through a driver circuit 1014 and is configured to selectively open and close the first switch 1012, in particular in accordance with a closing sequence consisting of a series of closing pulses that become longer towards the end of the closing sequence.

The second channel is in the lower part of fig. 10. The output current path of the second channel is divided into a first part and a second part by a two-pole output connector 1021. The connectors 1011 and 1021 may physically appear together as a common connector with at least four poles, or they may be separate connectors. A controllable second switch 1022 is located in the first part of the output current path of the second channel, and an output capacitance 1023 is coupled across the output, with the second switch 1022 located between one electrode of the output capacitance 1023 and the corresponding node of the output. Closing the second switch 1022 enables a discharging current to flow to the output capacitance 1023 of the second channel if semiconductor light sources are in place and bridge the output connector 1021, completing the current path for the discharging current. The controlling microprocessor 1001 is coupled to the control input of the second switch 1022 through a driver circuit 1024 and is configured to selectively open and close the second switch 1022, in particular in accordance with a closing sequence consisting of a series of closing pulses that become longer towards the end of the closing sequence.

If the driver device of fig. 10 is used to drive LEDs of two different colours (for example white LEDs of different colour temperature), the controlling microprocessor 1001 may be configured to implement the closing sequence in closing any of the first switch 1012 and the second switch 1022 when the output current of the respective output channel is switched on after a period of having been off. Such a situation may arise for example when the colour (or colour temperature) of the emitted light has been at one extreme value, so that only the LEDs of the other channel have emitted light, and the user or a device that produces lighting effects gives a command to gradually begin changing the colour (or colour temperature) towards a blended tone. This may be described in other words as changing the colour or colour temperature of light by initiating the flow of output current through semiconductor light sources of particular emission spectrum, wherein said initiating comprises implementing said closing sequence of a controllable switch on the output current path coupled to said semiconductor light sources of particular emission spectrum

The signal that goes from the controlling microprocessor 1001 to the driver circuit 1014 is labelled RAMP1 (correspondingly RAMP2 for the second output channel) in fig. 10 and it may come in any of a number of formats. For example, it may be a train of pulses that directly constitute the closing sequence, so that the role of the driver circuit 1014 is only to take care that the corresponding pulses are directed to the first switch 1012 at suitable polarity, amplitude, and slew rate. This is a straightforward option, because the relatively high clock frequency of the controlling microprocessor 1001 (typically in the order of at least tens of MHz) enables it to time any of its digital output signals at considerable resolution. However, at least in principle the signals RAMP1 and RAMP2 could be for example analogue voltage values, with some unequivocal correspondence to desired switching pulse durations, so that the driver circuits 1014 and 1024 would be responsible for producing the corresponding pulses that constituted the closing sequence.

Both output channels in fig. 10 are of the type described earlier with reference to fig. 9: each power switch has a respective driver circuit that obeys both analogue and digital control signals. For this purpose the controlling microprocessor 1001 produces two output signals labelled DIM1 and PWM1 (correspondingly: DIM2 and PWM2 for the second output channel) in fig. 10. The DIM1 signal is an analogue signal that defines a reference or maximum current level, and the PWM1 pulse is a digital signal that defines an enabling period. Both signals go to a pulse shaper 1015, which produces control pulses so that their duration (or duty cycle) corresponds to the PWM1 signal and their amplitude corresponds to the DIM1 signal. These control pulses are conducted to a suitable input pin of the second driver circuit 1016 which then operates accordingly, producing the switching pulses to the power switch 1017. A similar structure appears in the lower output channel in fig. 10 with output signals DIM2 and PWM2 controlling its operation.

Changes and modifications can be made to the exemplary embodiments described above without departing from the scope of protection defined by the appended claims. For example, any measuring of currents for the purpose of controlling the operation of the driver device can be made in many other ways than the ones described above and in the drawings. As illustrated with the principle-level circuit diagrams in fig. 4 and 5, the concept of using a closing sequence can be applied regardless of whether the switch on the current path is on the anode side or the cathode side of the LEDs. Components that have been illustrated as discrete components may be combined into integrated circuits in various ways.

## Claims

1. A driver device (401) for semiconductor light sources (102), comprising:
- an output current path, divided into a first part and a second part by an output for said semiconductor light sources, said output comprising a first node (406) and a second node (407),
- a controllable first switch (408) on said output current path, coupled to one of said first node (406) and said second node (407),
- an output capacitance (409) coupled to said output and to said first switch (408) so that closing said first switch (408) enables a discharging current to flow from said output capacitance (409) through the semiconductor light sources (102) coupled between said first and second nodes (406, 407),
- a control circuit (509) coupled through a first driver circuit (510) to a control input of said first switch (408) and configured to selectively open and close said first switch (408), and
- a switched-mode power supply (405) coupled to said output and configured to convert an internal bus voltage (Vbus) of said driver device (401) into an output voltage (Vout) for driving an output current through said semiconductor light sources (102) coupled between said first and second nodes (406, 407);
**characterized in that** said control circuit (509) is configured to selectively open and close said first switch (408) in accordance with pulses defined by a closing sequence before enabling said switched-mode power supply (405) to begin said converting of the internal bus voltage (Vbus) to the output voltage (Vout), wherein said closing sequence consists of a series of closing pulses that become longer towards the end of the closing sequence, the closing sequence thereby providing the semiconductor light sources (102) coupled between said first and second nodes (406, 407) with protection from a transient current.

2. A driver device according to claim 1, wherein:
- said first switch is a field effect transistor having a characteristic turn-on time, and
- at least a first pulse in said closing sequence is shorter than said characteristic turn-on time.

3. A driver device according to claim 1 or claim 2, wherein a rate at which said closing pulses occur during said closing sequence is higher than 1 kHz, and wherein a duration of the closing sequence is less than 1 second.

4. A driver device according to claim 3, wherein the rate at which said closing pulses occur during said closing sequence is higher than 100 kHz, and wherein the duration of the closing sequence is less than 2 milliseconds.

5. A driver device according to any of the preceding claims, wherein said switched-mode power supply comprises a power switch (502) and a current-controlling driver (511) configured to repeatedly switch said power switch on and off when said converting of the internal bus voltage to the output voltage is enabled by said control circuit.

6. A driver device according to claim 5, wherein said control circuit is configured to perform pulse width modulation of the output current by repeatedly enabling and disabling the conversion of the internal bus voltage to the output voltage, and by repeatedly closing and opening said first switch in concert with said repeated enabling and disabling.

7. A driver device according to any of claims 5 to 6, wherein:
- said switched-mode power supply is a buck converter of the low side switch type, so that said power switch is between a freewheeling current loop and a lower rail of the internal bus voltage of the driver device.

8. A driver device according to any of the preceding claims, wherein the first part of said output current path comes from a positive rail of the internal bus voltage of the driver device and comprises, in this order,
- a coupling to a first electrode of said output capacitance,
- said first switch, and
- the first node of said output,
and wherein the second part of said output current path comprises, in this order,
- the second node of said output and
- a coupling to a second electrode of said output capacitance.

9. A driver device according to any of the preceding claims, wherein:
- said output current path is the output current path of a first output channel of the driver device,
- the driver device comprises, in addition to said first output channel, a second output channel, the output current path of which comprises a controllable second switch,
- said output capacitance is the output capacitance of said first output channel, and the driver device comprises also an output capacitance of said second output channel, coupled to an output of said second output channel and to said second switch so that closing said second switch enables a discharging current to flow from said output capacitance of the second output channel through semiconductor light sources coupled to the output of said second output channel,
- the control circuit is also coupled to a control input of said second switch and configured to selectively open and close said second switch, and
- the control circuit is configured to selectively open and close any of said first switch and said second switch in accordance with the pulses defined by said closing sequence when output current of the respective output channel is switched on after a period of having been off.

10. A method for producing an output current for semiconductor light sources (102) coupled between a first node (406) and a second node (407) of an output current path, wherein a controllable first switch (408) coupled to one of said first and second nodes (406, 407) is arranged in said output current path and wherein an output capacitance (409) is coupled between said first and second nodes (406, 407) and to said first switch (408) so that closing said first switch (408) enables a discharging current to flow from said output capacitance (409) through said semiconductor light sources (102), **characterized in that** the method comprises, in the following order:
- keeping the first switch (408) open to prevent the output current from flowing, and
- repeatedly opening and closing said first switch (408) according to pulses defined by a closing sequence, in which closing pulses become longer towards the end of the closing sequence, thus gradually discharging said output capacitance (409) and thereby providing the semiconductor light sources (102) coupled between said first and second nodes (406, 407) with protection from a transient current.

11. A method according to claim 10, wherein a field effect transistor with a characteristic turn-on time is used as said first switch, and at least the first pulse in said closing sequence is shorter than said characteristic turn-on time.

12. A method according to claim 10 or 11, comprising after said closing sequence, in the following order:
- maintaining said first switch closed to allow output current to flow,
- starting a switched-mode power supply to convert an internal bus voltage into an output voltage for driving output current through said semiconductor light sources, and
- repeatedly enabling and disabling the converting of the internal bus voltage to the output voltage, and repeatedly closing and opening said first switch in concert with said repeated enabling and disabling, to produce a pulse width modulated output current.

13. A method according to any of claims 10 to 12, comprising:
- changing the colour or colour temperature of light by initiating the flow of output current through semiconductor light sources of particular emission spectrum, wherein said initiating comprises implementing said closing sequence of said first switch on the output current path coupled to said semiconductor light sources of particular emission spectrum.

## Patentansprüche

1. Treibervorrichtung (401) für Halbleiterlichtquellen (102), die Folgendes umfasst:
- einen Ausgangsstromweg, der in einen ersten Teil und einen zweiten Teil durch einen Ausgang für die Halbleiterlichtquellen geteilt ist, wobei der Ausgang einen ersten Knoten (406) und einen zweiten Knoten (407) umfasst,
- einen steuerbaren ersten Schalter (408) auf dem Ausgangsstromweg, der mit einem des ersten Knotens (406) und des zweiten Knotens (407) gekoppelt ist,
- eine Ausgangskapazität (409), die mit dem Ausgang und dem ersten Schalter (408) derart gekoppelt ist, dass das Schließen des ersten Schalters (408) ermöglicht, dass ein Entladestrom von der Ausgangskapazität (409) durch die Halbleiterlichtquellen (102), die zwischen dem ersten und dem zweiten Knoten (406, 407) gekoppelt sind, fließt,
- eine Steuerschaltung (509), die durch eine erste Treiberschaltung (510) mit einem Steuereingang des ersten Schalters (408) gekoppelt und konfiguriert ist, um selektiv den ersten Schalter (408) zu öffnen und zu schließen, und
- ein Schaltnetzteil (405), das mit dem Ausgang gekoppelt und konfiguriert ist, um eine interne Busspannung (Vbus) der Treibervorrichtung (401) in eine Ausgangsspannung (Vout) zum Treiben eines Ausgangsstroms durch die Halbleiterlichtquellen (102), die zwischen dem ersten und dem zweiten Knoten (406, 407) gekoppelt sind, umzuwandeln;
**dadurch gekennzeichnet, dass** die Steuerschaltung (509) konfiguriert ist, um selektiv den ersten Schalter (408) in Übereinstimmung mit Impulsen, die von einer Schließsequenz definiert sind, zu öffnen und zu schließen, bevor ermöglicht wird, dass das Schaltnetzteil (405) das Umwandeln der internen Busspannung (Vbus) in die Ausgangsspannung (Vout) beginnt, wobei die Schließsequenz aus einer Reihe von Schließimpulsen besteht, die zu dem Ende der Schließsequenz hin beginnt, länger zu werden, wobei die Schließsequenz dadurch die Halbleiterlichtquellen (102), die zwischen dem ersten und dem zweiten Knoten (406, 407) gekoppelt sind, mit Schutz vor einem transienten Strom versieht.

2. Treibervorrichtung nach Anspruch 1, wobei:
- der erste Schalter ein Feldeffekttransistor ist, der eine charakteristische Einschaltzeit aufweist, und
- mindestens ein erster Impuls in der Schließsequenz kürzer ist als die charakteristische Einschaltzeit.

3. Treibervorrichtung nach Anspruch 1 oder 2, wobei eine Rate, mit der die Schließimpulse während der Schließsequenz auftreten, höher ist als 1 kHz, und wobei eine Dauer der Schließsequenz weniger als 1 Sekunde beträgt.

4. Treibervorrichtung nach Anspruch 3, wobei die Rate, mit der die Schließimpulse während der Schließsequenz auftreten, höher ist als 100 kHz, und wobei die Dauer der Schließsequenz weniger als 2 Millisekunden beträgt.

5. Treibervorrichtung nach einem der vorstehenden Ansprüche, wobei das Schaltnetzteil einen Stromschalter (502) und einen Stromsteuertreiber (511) umfasst, der konfiguriert ist, um den Stromschalter wiederholt ein- und auszuschalten, wenn das Umwandeln der internen Busspannung in die Ausgangsspannung von der Steuerschaltung aktiviert wird.

6. Treibervorrichtung nach Anspruch 5, wobei die Steuerschaltung konfiguriert ist, um Impulsbreitenmodulation des Ausgangsstroms durch wiederholtes Aktivieren und Deaktivieren der Umwandlung der internen Busspannung in die Ausgangsspannung auszuführen, und durch wiederholtes Schließen und Öffnen des ersten Schalters im Einklang mit dem wiederholten Aktivieren und Deaktivieren.

7. Treibervorrichtung nach einem der Ansprüche 5 bis 6, wobei
- das Schaltnetzteil ein Abwärtsregler vom Low-Side-Schaltertyp ist, so dass der Stromschalter zwischen einer Freilaufstromschleife und einer unteren Schiene der internen Busspannung der Treibervorrichtung liegt.

8. Treibervorrichtung nach einem der vorstehenden Ansprüche, wobei der erste Teil des Ausgangsstromwegs von einer positiven Schiene der internen Busspannung der Treibervorrichtung kommt und in der folgenden Reihenfolge Folgendes umfasst:
- eine Kopplung mit einer ersten Elektrode der Ausgangskapazität,
- den ersten Schalter, und
- den ersten Knoten des Ausgangs,
und wobei der zweite Teil des Ausgangsstromwegs in der folgenden Reihenfolge Folgendes umfasst,
- den zweiten Knoten des Ausgangs und
- eine Kopplung mit einer zweiten Elektrode der Ausgangskapazität.

9. Treibervorrichtung nach einem der vorstehenden Ansprüche, wobei:
- der Ausgangsstromweg der Ausgangsstromweg eines ersten Ausgangskanals der Treibervorrichtung ist,
- die Treibervorrichtung zusätzlich zu dem ersten Ausgangskanal einen zweiten Ausgangskanal umfasst, dessen Ausgangsstromweg einen steuerbaren zweiten Schalter umfasst,
- wobei die Ausgangskapazität die Ausgangskapazität des ersten Ausgangskanals ist, und die Treibervorrichtung auch eine Ausgangskapazität des zweiten Ausgangskanals umfasst, die mit einem Ausgang des zweiten Ausgangskanals und dem zweiten Schalter derart gekoppelt ist, dass das Schließen des zweiten Schalters ermöglicht, dass ein Entladestrom von der Ausgangskapazität zu dem zweiten Ausgangskanal durch Halbleiterlichtquellen, die mit dem Ausgang des zweiten Ausgangskanals gekoppelt sind, fließt,
- die Steuerschaltung auch mit einem Steuereingang des zweiten Schalters gekoppelt und konfiguriert ist, um den zweiten Schalter selektiv zu öffnen und zu schließen, und
- die Steuerschaltung konfiguriert ist, um einen des ersten Schalters und des zweiten Schalters selektiv in Übereinstimmung mit den Impulsen, die durch die Schließsequenz definiert sind, zu öffnen und zu schließen, wenn Ausgangsstrom des jeweiligen Ausgangskanals nach einer Periode im ausgeschalteten Zustand eingeschaltet wird.

10. Verfahren zum Erzeugen eines Ausgangsstroms für Halbleiterlichtquellen (102), die zwischen einem ersten Knoten (406) und einem zweiten Knoten (407) eines Ausgangsstromwegs gekoppelt sind, wobei ein steuerbarer erster Schalter (408), der mit einem des ersten und zweiten Knotens (406, 407) gekoppelt ist, in dem Ausgangsstromweg eingerichtet ist, und wobei eine Ausgangskapazität (409) zwischen dem ersten und dem zweiten Knoten (406, 407) und mit dem ersten Schalter (408) derart gekoppelt ist, dass das Schließen des ersten Schalters (408) ermöglicht, dass ein Entladestrom von der Ausgangskapazität (409) durch die Halbleiterlichtquellen (102) fließt, **dadurch gekennzeichnet, dass** das Verfahren in der folgenden Reihenfolge Folgendes umfasst:
- Offenhalten des ersten Schalters (408), um zu verhindern, dass der Ausgangsstrom fließt, und
- wiederholtes Öffnen und Schließen des ersten Schalters (408) gemäß Impulsen, die durch eine Schließsequenz definiert sind, wobei die Schließimpulse zu dem Ende der Schließsequenz hin länger werden, so dass die Ausgangskapazität (409) allmählich entladen wird, und wodurch die Halbleiterlichtquellen (102), die zwischen dem ersten und dem zweiten Knoten (406, 407) gekoppelt sind, mit Schutz vor einem transienten Strom versehen sind.

11. Verfahren nach Anspruch 10, wobei ein Feldeffekttransistor mit einer charakteristischen Einschaltzeit als der erste Schalter verwendet wird, und mindestens der erste Impuls in der Schließsequenz kürzer ist als die charakteristische Einschaltzeit.

12. Verfahren nach Anspruch 10 oder 11, das nach der Schließsequenz in der folgenden Reihenfolge Folgendes umfasst:
- Geschlossenhalten des ersten Schalters, um zu erlauben, dass Ausgangsstrom fließt,
- Starten eines Schaltnetzteils, um eine interne Busspannung in eine Ausgangsspannung zum Treiben von Ausgangsstrom durch die Halbleiterlichtquellen umzuwandeln, und
- wiederholtes Aktivieren und Deaktivieren des Umwandelns der internen Busspannung in die Ausgangsspannung, und wiederholtes Schließen und Öffnen des ersten Schalters im Einklang mit dem wiederholten Aktivieren und Deaktivieren, um einen pulsbreitenmodulierten Ausgangsstrom zu erzeugen.

13. Verfahren nach einem der Ansprüche 10 bis 12, das Folgendes umfasst:
- Ändern der Farbe oder Farbtemperatur von Licht durch Initiieren des Fließens von Ausgangsstrom durch Halbleiterlichtquellen mit speziellem Emissionsspektrum, wobei das Initiieren das Umsetzen der Schließsequenz des ersten Schalters auf dem Ausgangsstromweg, der mit den Halbleiterlichtquellen mit speziellem Emissionsspektrum gekoppelt ist, umfasst.

## Revendications

1. Dispositif d'attaque (401) destiné à des sources lumineuses à semi-conducteurs (102), comprenant :
- un trajet de courant de sortie, divisé en une première partie et une seconde partie par une sortie pour lesdites sources lumineuses à semi-conducteurs, ladite sortie comprenant un premier noeud (406) et un second noeud (407),
- un premier commutateur contrôlable (408) sur ledit trajet de courant de sortie, couplé à un dudit premier noeud (406) et dudit second noeud (407),
- une capacitance de sortie (409) couplée à ladite sortie et audit premier commutateur (408) de sorte que fermer ledit premier commutateur (408) permet à un courant de décharge de circuler à partir de ladite capacitance de sortie (409) à travers les sources lumineuses à semi-conducteurs (102) couplées entre lesdits premier et second noeuds (406, 407),
- un circuit de commande (509) couplé par le biais d'un premier circuit d'attaque (510) à une entrée de commande dudit premier commutateur (408) et configuré pour ouvrir et fermer sélectivement ledit premier commutateur (408), et
- une alimentation électrique en mode commuté (405) couplée à ladite sortie et configurée pour convertir une tension de bus interne (Vbus) dudit dispositif d'attaque (401) en une tension de sortie (Vout) afin de commander un courant de sortie à travers lesdites sources lumineuses à semi-conducteurs (102) couplées entre lesdits premier et second noeuds (406, 407) ;
**caractérisé en ce que** ledit circuit de commande (509) est configuré pour ouvrir et fermer sélectivement ledit premier commutateur (408) en fonction des impulsions définies par une séquence de fermeture avant de permettre à ladite alimentation électrique en mode commuté (405) de commencer ladite conversion de la tension de bus interne (Vbus) en tension de sortie (Vout), dans lequel ladite séquence de fermeture se compose d'une série d'impulsions de fermeture qui deviennent plus longues vers la fin de la séquence de fermeture, la séquence de fermeture fournissant ainsi les sources lumineuses à semi-conducteurs (102) couplées entre lesdits premier et second noeuds (406, 407) avec une protection contre un courant transitoire.

2. Dispositif d'attaque selon la revendication 1, dans lequel :
- ledit premier commutateur est un transistor à effet de champ ayant un temps d'activation de caractéristiques, et
- au moins une première impulsion dans ladite séquence de fermeture est plus courte que ledit temps d'activation de caractéristiques.

3. Dispositif d'attaque selon la revendication 1 ou la revendication 2, dans lequel un taux auquel se produisent lesdites impulsions de fermeture pendant ladite séquence de fermeture est supérieur à 1 kHz, et dans lequel une durée de la séquence de fermeture est inférieure à 1 seconde.

4. Dispositif d'attaque selon la revendication 3, dans lequel le taux auquel se produisent lesdites impulsions de fermeture pendant ladite séquence de fermeture est supérieur à 100 kHz, et dans lequel la durée de la séquence de fermeture est inférieure à 2 millisecondes.

5. Dispositif d'attaque selon l'une quelconque des revendications précédentes, dans lequel ladite alimentation électrique en mode commuté comprend un commutateur de puissance (502) et un circuit d'attaque de commande de courant (511) configuré pour commuter de manière répétée ladite commutation de puissance sur marche et arrêt lorsque ladite conversion de la tension de bus interne en tension de sortie est activée par ledit circuit de commande.

6. Dispositif d'attaque selon la revendication 5, dans lequel ledit circuit de commande est configuré pour exécuter une modulation de largeur d'impulsion du courant de sortie en activant et en désactivant de manière répétée la conversion de la tension de bus interne en tension de sortie, et en fermant et en ouvrant de manière répétée ledit premier commutateur en concert avec ladite activation et désactivation répétées.

7. Dispositif d'attaque selon l'une quelconque des revendications 5 à 6, dans lequel :
- ladite alimentation électrique en mode commuté est un convertisseur abaisseur du type de commutateur côté bas, de sorte que ledit commutateur de puissance se trouve entre une boucle de courant en roue libre et un rail inférieur de la tension de bus interne du dispositif d'attaque.

8. Dispositif d'attaque selon l'une quelconque des revendications précédentes, dans lequel la première partie dudit trajet de courant de sortie vient d'un rail positif de la tension de bus interne du dispositif d'attaque et comprend, dans cet ordre :
- un couplage à une première électrode de ladite capacitance de sortie,
- ledit premier commutateur, et
- le premier noeud de ladite sortie,
et dans lequel la seconde partie dudit trajet de courant de sortie comprend, dans cet ordre :
- le second noeud de ladite sortie et
- un couplage à une seconde électrode de ladite capacitance de sortie.

9. Dispositif d'attaque selon l'une quelconque des revendications précédentes, dans lequel :
- ledit trajet de courant de sortie est le trajet de courant de sortie d'un premier canal de sortie du dispositif d'attaque,
- le dispositif d'attaque comprend, en plus dudit premier canal de sortie, un second canal de sortie, dont le trajet de courant de sortie comprend un second commutateur contrôlable,
- ladite capacitance de sortie est la capacitance de sortie dudit premier canal de sortie, et le dispositif d'attaque comprend également une capacitance de sortie dudit second canal de sortie, couplée à une sortie dudit second canal de sortie et audit second commutateur de sorte que fermer ledit second commutateur permet à un courant de décharge de circuler de ladite capacitance de sortie du second canal de sortie à travers des sources lumineuses à semi-conducteurs couplées à la sortie dudit second canal de sortie,
- le circuit de commande est également couplé à une entrée de commande dudit second commutateur et configuré pour ouvrir et fermer sélectivement ledit second commutateur, et
- le circuit de commande est configuré pour ouvrir et fermer sélectivement l'un quelconque dudit premier commutateur et dudit second commutateur en fonction des impulsions définies par ladite séquence de fermeture lorsque le courant de sortie du canal de sortie respectif est allumé après une période où il a été éteint.

10. Procédé de production d'un courant de sortie pour des sources lumineuses à semi-conducteurs (102) couplées entre un premier noeud (406) et un second noeud (407) d'un trajet de courant de sortie, dans lequel un premier commutateur contrôlable (408) couplé à un desdits premier et second noeuds (406, 407) est disposé dans ledit trajet de courant de sortie et dans lequel une capacitance de sortie (409) est couplée entre lesdits premier et second noeuds (406, 407) et audit premier commutateur (408) de sorte que fermer ledit premier commutateur (408) permet à un courant de décharge de circuler à partir de ladite capacitance de sortie (409) à travers lesdites sources lumineuses à semi-conducteurs (102), **caractérisé en ce que** le procédé comprend, dans l'ordre suivant, de :
- conserver ouvert le premier commutateur (408) pour empêcher le courant de sortie de circuler, et
- ouvrir et fermer de manière répétée ledit premier commutateur (408) en fonction d'impulsions définies par une séquence de fermeture, dans laquelle le fait de fermer des impulsions devient plus long vers la fin de la séquence de fermeture, ce qui permet de décharger graduellement ladite capacitance de sortie (409) et ainsi de fournir les sources lumineuses à semi-conducteurs (102) couplées entre lesdits premier et second noeuds (406, 407) avec une protection contre un courant transitoire.

11. Procédé selon la revendication 10, dans lequel un transistor à effet de champ ayant un temps d'activation de caractéristiques est utilisé en tant que ledit premier commutateur, et au moins la première impulsion dans ladite séquence de fermeture est plus courte que ledit temps d'activation de caractéristiques.

12. Procédé selon la revendication 10 ou 11, comprenant après ladite séquence de fermeture, dans l'ordre suivant, de :
- maintenir ledit premier commutateur fermé pour permettre au courant de sortie de circuler,
- démarrer une alimentation électrique en mode commuté pour convertir une tension de bus interne en une tension de sortie afin de commander le courant de sortie à travers lesdites sources lumineuses à semi-conducteurs, et
- activer et désactiver de manière répétée la conversion de la tension de bus interne en tension de sortie, et fermer et ouvrir de manière répétée ledit premier commutateur en concert avec lesdites activation et désactivation répétées, pour produire un courant de sortie modulé en largeur d'impulsion.

13. Procédé selon l'une quelconque des revendications 10 à 12, comprenant :
- le changement de la couleur ou de la température de la couleur de lumière en initiant le flux du courant de sortie à travers des sources lumineuses à semi-conducteurs d'un spectre d'émission particulier, dans lequel ladite initiation comprend la mise en oeuvre de ladite séquence de fermeture dudit premier commutateur sur le trajet de courant de sortie couplée auxdites sources lumineuses à semi-conducteurs d'un spectre d'émission particulier.
